# EUROPÄISCHE PATENTANMELDUNG

(11) **EP 1 403 575 A2**
(43) Veröffentlichungstag der Anmeldung: **31.03.2004**
(21) Anmeldenummer: 03103594.2
(22) Anmeldetag: 29.09.2003
(51) Int. Cl.: F16K 11/16, F16K 31/06, F16K 31/08

(54) **Pneumatisches Ventil mit einem Drehanker**

(30) Priorität: 30.09.2002 DE 10245706
(71) Anmelder: Bosch Rexroth AG, 70442 Stuttgart (DE)
(72) Erfinder: Widera, Jörg, 70839 Gerlingen (DE)
(74) Vertreter: Kietzmann, Lutz

(57) **Zusammenfassung**

Der Gegenstand der vorliegenden Erfindung betrifft ein pneumatisches Ventil (1) mit einem Ventilgehäuse (6) in dem mindestens ein über einen Stößel (3) betätigbares Vorsteuerventil (2) zum Sperren oder Öffnen von integrierten Fluidkanälen (5) angeordnet ist, wobei in dem Ventilgehäuse (6) weiterhin ein elektro-magnetisch betätigbarer und um eine Drehachse schwenkbarer Drehanker (4) zur Betätigung des Stößels (3) angeordnet ist.

## Beschreibung

Die Erfindung betrifft ein pneumatisches Ventil mit einem Ventilgehäuse in dem mindestens ein über einen Stößel betätigbares Vorsteuerventil zum Sperren oder Öffnen von integrierten Fluidkanälen angeordnet ist.

Derartige Ventile kommen in fast allen Bereichen der Technik zum Einsatz. Insbesondere in der Antriebs- und Steuerungstechnik sind pneumatische Ventile weit verbreitet. Typische Beispiele von pneumatischen Ventilen sind Wege-, Sperr-, Strom- und sonstige.

Sonderventile. Die vorliegende Erfindung befasst sich mit der Ausbildung von pneumatischen Wegeventilen.
Allgemein bekannte pneumatische Wegeventile bestehen im Wesentlichen aus einem Ventilgehäuse, welches Fluidkanäle und einen mit den Fluidkanälen verbundenen Arbeitsraum für den Ventilmechanismus aufweist. Der nach Art eines Sitz- oder Schieberventils ausgebildete Ventilmechanismus ist über einen axial bewegbaren Stößel betätigbar, um das durch die Fluidkanäle strömende Fluid zu schalten. Bekannt sind manuelle, mechanische, pneumatische und elektrische Betätigungseinheiten für den Stößel.

Bekannte pneumatische Ventile sind oftmals im Verhältnis zum recht großbauend und weisen viele, aufwändig zu montierende Bauteile auf.

Es ist daher die Aufgabe der vorliegenden Erfindung, ein pneumatisches Ventil zu schaffen, bei dem wenige Bauteile benötigt werden, die mehrere Ventilfunktionen in einem Ventilgehäuse durch einfache bauliche Variationen ermöglichen.

Diese Aufgabe wird ausgehend von einem Ventil gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass in dem Ventilgehäuse zur Betätigung des Stößels ein elektro- magnetisch betätigbarer, um eine Drehachse schwenkbarer Drehanker angeordnet ist.

Diese Lösung bietet den Vorteil, dass das pneumatische Ventil weniger Bauteile benötigt, wodurch ein geringeres Bauvolumen realisierbar ist. Durch geringfügige Abwandlungen lassen sich auf einfache Weise mehrere Ventilfunktionen umsetzen.

Vorteilhaft ist, wenn das Ventilgehäuse im Wesentlichen zwei Ventilgehäusebereiche umfasst, wobei ein erster Ventilgehäusebereich als eine Art Kammer zur Unterbringung des Drehankers ausgebildet ist, und in einem zweiten Ventilgehäusebereich die Fluidkanäle und das mindestens eine Vorsteuerventile angeordnet sind. So lassen sich die Vorsteuerventile und die Ventilbetätigung platzsparend und kompakt in einem Ventilgehäuse unterbringen.

Vorzugsweise ist der Drehanker mittig um eine auf dem Drehanker angeordneten Drehachse schwenkbar. Damit sind die Hebelarme links und rechts der Drehachse gleich lang, wodurch kein Drehmoment im unbelasteten Zustand des Drehankers aufgrund von Schwerkraft bei entsprechender Einbaulage entsteht.

Ein weiterer Vorteil lässt sich dadurch erzielen, dass die Hauptachse des Drehankers in der Ruheposition in etwa senkrecht zu der Bewegungsachse des Vorsteuerventils gestaltet ist, um eine Schwenkbewegung des Drehankers dynamisch günstig auf das Vorsteuerventil zu übertragen. Hierdurch lässt sich auch die Ventilbreite reduzieren.

Eine weitere die Erfindung verbessernde Maßnahme ist, dass der Drehanker zwei metallische, elektrisch leitende Flussleitschienen aufweist, welche in einfacher Weise über zwei symmetrisch um den Drehpunkt angeordnete Permanentmagneten miteinander verbunden sind.

Besonders vorteilhaft ist es, wenn der Drehanker Mittel zum Schwenken in genau zwei Endpositionen und zur Positionsfixierung des Drehankers in der jeweiligen Endposition aufweist. Durch eine möglichst geringfügige Schwenkbewegung benötigt der Drehanker zur Bewegung in die jeweilige Endposition, so dass das gesamte Ventil insgesamt kleiner baut. Außerdem lassen sich hierdurch eine Reihe von sehr gebräuchlichen Ventilfunktionen umsetzen.

Vorzugsweise wird durch Umpolung von zwei Elektromagneten der Drehanker in verschiedene Endpositionen geschwenkt. Die kleinbauenden Elektromagneten sind platzsparend an dem Drehanker angebracht.

Um zwischen zwei Positionen zu schalten, ist im ersten Ventilgehäusebereich des Ventilgehäuses eine Rückstellfeder zur Rückstellung des Drehankers in die Ruhestellung untergebracht ist,. So lässt sich durch einfache bauliche Variation die Funktion des Ventils von einer bistabilen Funktion in eine monostabile Funktion verändern.

Die Rückstellfeder kann in dem Ventilgehäuse so angeordnet sein, dass der Drehanker bei Bestromung in einer Endpositionen fixiert ist und bei Abschaltung der Bestromung eine Rückstellung des Drehankers in die Ruhestellung erfolgt, wodurch eine Funktion als 3/2 oder 5/2 monostabiles Wegeventil realisiert ist.

Weiterhin können die umpolbaren Elektromagneten des Drehankers zwischen den Enden der Flussleitschienen so angeordnet sein, dass eine Umpolung der Elektromagneten eine bistabile Schwenkbewegung hervorruft, um eine Funktion des Ventils als 5/2- oder 3/2-bistabiles Wegeventil zu realisieren.

Eine weitere vorteilhafte Ausführung sieht vor, dass das Vorsteuerventil nach Art eines Patronenventils ausgebildet ist, um eine einfache Montage des Vorsteuerventils zu gewährleisten.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine Schnittansicht durch ein pneumatisches Ventil mit der Funktion eines bistabilen 5/2 Wegeventils,
- Fig. 2: eine Schnittansicht durch ein pneumatisches Ventil mit der Funktion eines monostabilen 5/2 Wegeventils,
- Fig. 3: eine Schnittansicht durch eine erste Variante eines pneumatischen Ventils mit der Funktion eines monostabilen 3/2 Wegeventils, und
- Fig. 4: eine Schnittansicht durch eine zweite Variante eines pneumatischen Ventils mit der Funktion eines monostabilen 3/2 Wegeventils.

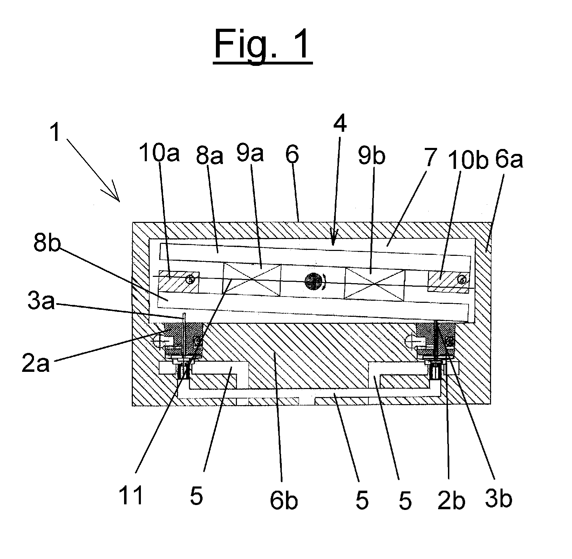

In Fig. 1 ist ein erfindungsgemäßes pneumatisches Ventil 1 dargestellt. Das Ventil 1 umfasst ein erstes Vorsteuerventil 2a und ein zweites Vorsteuerventil 2b, welche beide über je einen Stößel 3 betätigbar sind, einen Drehanker 4 und Fluidkanäle 5, die in einem die Bauteile umgebenden Ventilgehäuse 6 integriert sind. Das Ventilgehäuse 6 weist zwei Ventilgehäusebereiche auf, nämlich einen ersten Ventilgehäusebereich 6a und einen zweiten Ventilgehäusebereich 6b. In dem ersten Ventilgehäusebereich 6a des Ventilgehäuses 6 ist eine Kammer 7 ausgebildet. In dieser Kammer 7 ist der Drehanker 4 schwenkbar um die gezeigte Drehachse gelagert. Der Drehanker 4 umfasst zwei metallische, den elektrischen Strom leitende Flussleitschienen 8, die fest über zwei Permanentmagneten 9a, 9b parallel zueinander verbunden sind, welche symmetrisch um die Drehachse angeordnet sind. Ein U-förmiges Spulenjoch liegt unter dem aus Flussleitschienen 8 und Permanentmagneten 9 gebildeten Ankersystem. Zwischen den Enden der metallischen Flussleitschienen 8 sind die Pole 10a, 10b eines Elektromagneten 10 angeordnet. Im Zentrum des aus nicht leitendem Material bestehenden Ankers befindet sich die Drehachse.

Bei der in Fig. 1 dargestellten Anordnung bilden sich gegenüber den Polen 10a, 10b des Elektromagneten 10 die Pole der Permanentmagneten 9a, 9b in den Flussleitschienen 8. Auf diese Weise wird entlang der einen Seite des Drehankers 4 eine erste als Südpol ausgebildete Flussleitschiene 8a von dem ersten Pol 10a des Elektromagneten 10 abgestoßen und auf der anderen Seite die erste Flussleitschiene 8a von dem zweiten Pol 10b angezogen. In der zweiten als Südpol ausgebildeten Flussleitschiene 8b passiert das gleiche in umgekehrter Weise.

Hierdurch wird ein Drehmoment um die Drehachse erzeugt, welches den Drehanker 4 in die in Fig. 1 dargestellte Position bewegt. Die Hauptachse 11 des Drehankers 4 ist praktisch senkrecht zu der Bewegungsachse der Vorsteuerventile 2, genauer zur Bewegungsachse der Stößel 3 der Vorsteuerventile 2 ausgerichtet. In dem zweiten Ventilgehäusebereich 6b sind die Fluidleitungen 5 und die Vorsteuerventile 2 angeordnet. Die Vorsteuerventile 2 bilden die Verbindung zwischen den Fluidkanälen 5 und dem Drehanker 4.

Durch Schwenkbewegung des Drehankers 4 wird beispielsweise der zweite Stößel 3b des zweiten Vorsteuerventils 2b in Richtung des zweiten Ventilgehäuses 6b bewegt. Hierdurch wird über den Stößel 3b die Dichtscheibe von dem Entlüftungssitz auf den Belüftungssitz gedrückt und der entsprechende Fluidkanal 5 gesperrt. Wird nun der Elektromagnet 10 umgepolt, schwenkt der Drehanker 4 in die entgegengesetzte Endposition Dabei wird der zweite Stößel 3b entlastet und der erste Stößel 3a belastet. Dadurch wird der gerade gesperrte Fluidkanal 5 geöffnet und der zuvor geöffnete Fluidkanal 5 gesperrt. Der Drehanker 4 bleibt durch die magnetische Kraft des Permanentmagneten 9 in der geschalteten Stellung stehen, auch wenn der Elektromagnet 10 stromlos geschaltet ist. Somit ist ein Spannungsimpulsbetrieb möglich.

Die mit dieser Anordnung realisierte Funktion entspricht der Funktion eines bistabilen 5/2 Wegeventils.

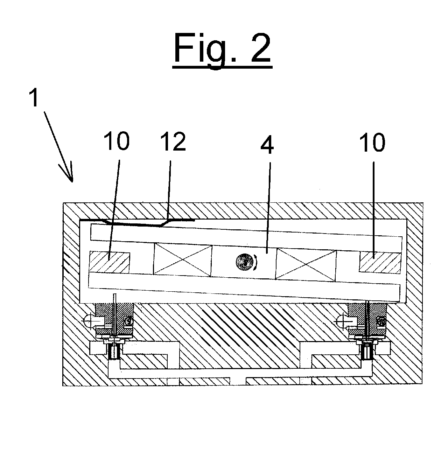

In Fig. 2 ist das pneumatische Ventil 1 als monostabiles 5/2 Wegeventil ausgelegt. Der einzige Unterschied zu der in Fig. 1 beschriebenen Ausführung ist der, dass der Drehanker 4 nicht durch Umpolung des Elektromagneten 10 in eine zweite Endposition bewegt wird, sondern durch eine Rückstellfeder 12.

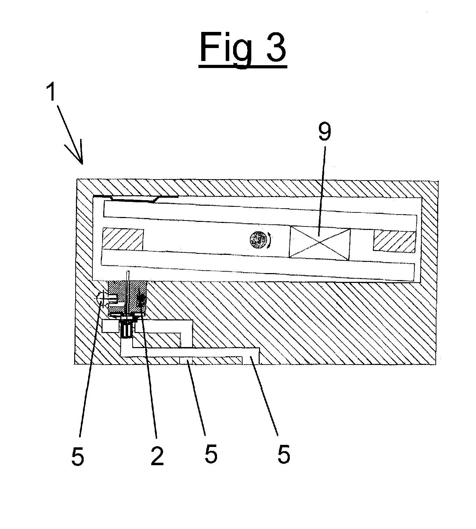

Fig. 3 zeigt ein pneumatisches Ventil 1, dass als eine erste Variante eines monostabilen 3/2 Wegeventils ausgebildet ist. Im Unterschied zu Fig. 2 weist das hier dargestellte pneumatische Ventil 1 nur ein Vorsteuerventil 2, einen Permanentmagneten 8 und nur drei Fluidkanäle 5 auf.

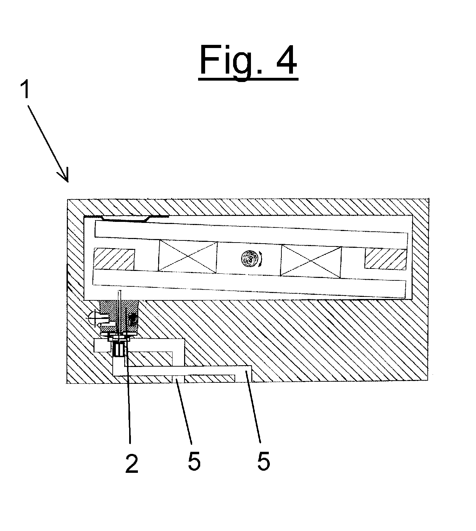

Fig. 4 stellt ein pneumatisches Ventil 1 dar, welches als eine zweite Variante eines monostabilen 3/2 Wegeventils ausgebildet ist. Im Unterschied zu Fig. 2 weist das in Fig. 4 dargestellte pneumatische Ventil 1 nur ein Vorsteuerventil 2 und nur drei Fluidkanäle auf.

### Bezugszeichenliste

- **1**: Pneumatisches Ventil
- **2**: Vorsteuerventil
- **2 a**: Erstes Vorsteuerventil
- **2 b**: Zweites Vorsteuerventil
- **3**: Stößel
- **3 a**: Erster Stößel
- **3 b**: Zweiter Stößel
- **4**: Drehanker
- **5**: Fluidkanal
- **6**: Ventilgehäuse
- **6 a**: Erster Ventilgehäusebereich
- **6 b**: Zweiter Ventilgehäusebereich
- **7**: Kammer
- **8**: Flussleitschiene
- **8 a**: Erste Flussleitschiene
- **8 b**: Zweite Flussleitschiene
- **9**: Permanentmagnet
- **9 a**: Erster Permanentmagnet
- **9 b**: Zweiter Permanentmagnet
- **10**: Elektromagnet
- **10 a**: Erster Pol
- **10 b**: Zweiter Pol
- **11**: Hauptachse
- **12**: Rückstellfeder

## Patentansprüche

1. Pneumatisches Ventil (1) mit einem Ventilgehäuse (6) in dem mindestens ein über einen je zugeordneten Stößel (3) betätigbares Vorsteuerventil (2) zum Sperren oder Öffnen von integrierten Fluidkanälen (5) angeordnet ist,
**dadurch gekennzeichnet, dass** in dem Ventilgehäuse (6) weiterhin ein elektro-magnetisch betätigbarer und um eine Drehachse schwenkbarer Drehanker (4) zur Betätigung des Stößels (3) angeordnet ist.

2. Pneumatisches Ventil (1) nach Anspruch 1,
**dadurch gekennzeichnet, dass** das Ventilgehäuse (6) im Wesentlichen zwei Ventilgehäusebereiche (6a, 6b) umfasst, wobei ein erster Ventilgehäusebereich (6a) als Kammer zur Unterbringung des Drehankers (4) ausgebildet ist, und ein zweiter Ventilgehäusebereich (6b) die Fluidkanäle (5) und das mindestens eine Vorsteuerventile (2) beherbergt.

3. Pneumatisches Ventil (1) nach einem der Ansprüche 1 oder 2,
**dadurch gekennzeichnet, dass** der Drehanker (4) um eine mittig auf einer Hauptachse (11) angeordnete Drehachse schwenkbar ist.

4. Pneumatisches Ventil (1) nach einem der Ansprüche 1 bis 3,
**dadurch gekennzeichnet, dass** die Hauptachse (11) des Drehankers (4) in der Ruheposition in etwa senkrecht zu der Bewegungsachse des Vorsteuerventils (2) verläuft, um die Schwenkbewegung des Drehankers (4) auf das Vorsteuerventil (2) zu übertragen.

5. Pneumatisches Ventil (1) nach einem der Ansprüche 1 bis 4,
**dadurch gekennzeichnet, dass** der Drehanker (4) zwei metallische, elektrisch leitende Flussleitschienen (8) aufweist, welche über zwei symmetrisch um den Drehpunkt angeordnete Permanentmagneten (9) miteinander verbunden sind.

6. Pneumatisches Ventil (1) nach einem der Ansprüche 1 bis 5,
**dadurch gekennzeichnet, dass** der Drehanker (4) ein U-förmiges Spulenjoch aufweist.

7. Pneumatisches Ventil (1) nach einem der Ansprüche 1 bis 6,
**dadurch gekennzeichnet, dass** der Drehanker (4) Mittel zum Schwenken in genau zwei Endpositionen und zur Positionsfixierung in der jeweiligen Endposition aufweist.

8. Pneumatisches Ventil (1) nach Anspruch 7,
**dadurch gekennzeichnet, dass** die Mittel bestrombare Elektromagneten (10) sind, so dass durch Umpolung der Elektromagneten (10) der Drehanker (4) in verschiedene Endpositionen schwenkbar ist.

9. Pneumatisches Ventil (1) nach einem der Ansprüche 1 bis 8,
**dadurch gekennzeichnet, dass** im ersten Ventilgehäusebereich (6a) des Ventilgehäuses (6) eine Rückstellfeder (12) zur Rückstellung des Drehankers (4) in die Ruhestellung untergebracht ist, um zwischen zwei Positionen schalten.

10. Pneumatisches Ventil (1) nach einem der Ansprüche 1 bis 9,
**dadurch gekennzeichnet, dass** die Rückstellfeder (12) in dem Ventilgehäuse (6) so angeordnet ist, dass der Drehanker (4) bei Bestromung in einer Endpositionen fixiert ist und bei Abschaltung der Bestromung eine Rückstellung des Drehankers (4) in die Ruhestellung erfolgt, wodurch eine Funktion als 3/2 oder 5/2 monostabiles Wegeventil realisiert is t.

11. Pneumatisches Ventil (1) nach einem der Ansprüche 1 bis 8,
**dadurch gekennzeichnet, dass** die umpolbaren Elektromagneten (10) des Drehankers (4) zwischen den Enden der Flussleitschienen (8a, 8b) so angeordnet sind, dass eine Umpolung der Elektromagneten (10) eine Schwenkbewegung hervorruft, um eine Funktion des Ventils als 5/2 oder 3/2 bistabiles Wegeventil zu realisieren.

12. Pneumatisches Ventil (1) nach einem der Ansprüche 1 bis 11,
**dadurch gekennzeichnet, dass** das Vorsteuerventil (2) nach Art eines Patronenventils ausgebildet ist, um ein einfache Montage in den Ventilgehäusebereich (6b) zu gewährleisten.
